# EUROPÄISCHE PATENTSCHRIFT

(11) **EP 3 466 842 B1**
(45) Veröffentlichungstag und Bekanntmachung des Hinweises auf die Patenterteilung: **30.03.2022**
(21) Anmeldenummer: 18198095.4
(22) Anmeldetag: 02.10.2018
(51) Int. Cl.: B65G 1/02, A47B 95/04

(54) **SCHUTZVORRICHTUNG FÜR LAGERPFOSTEN**
PROTECTION DEVICE FOR STORAGE POSTS
DISPOSITIF DE PROTECTION POUR MONTANTS DE RAYONNAGE

(30) Priorität: 05.10.2017 DE 102017123057
(43) Veröffentlichungstag der Anmeldung: 10.04.2019
(73) Patentinhaber: Nedcon B.V., 7005 BJ Doetinchem (NL)
(72) Erfinder: Groen, Beinte Jan-Hein, 7414 Deventer (NL); Frederiks, Jan Willem, 7009 Doetinchem (NL)
(74) Vertreter: Janke Scholl Patentanwälte PartG mbB

(56) Entgegenhaltungen:
- DE-U1-202015 007 354
- DE-U1-202016 002 472
- FR-A1- 2 941 974

## Beschreibung

Die vorliegende Erfindung betrifft eine Schutzvorrichtung für einen Regalpfosten gegen Stoßeinwirkungen, mit einem einen U-förmigen Horizontalquerschnitt aufweisenden Grundkörper aus mehrfach gekantetem Stahlblech, der einen unteren Längsabschnitt des Regalpfostens zumindest auf drei Seiten umgibt, wobei sich der Grundkörper zusammensetzt aus einer Vorderwand und an die Vorderwand anschließenden linken und rechten Seitenwänden, die sich ausgehend von der Vorderwand jeweils nach hinten erstrecken und dort jeweils einen rückwärtigen Rand bilden, wobei die Innenflächen der Vorderwand und der Seitenwände dem Pfosten zugewandt sind, sowie mit an dem Grundkörper angeordneten Befestigungssockeln zur Bodenmontage der Schutzvorrichtung, wobei die Befestigungssockel mit an ihnen ausgebildeten Unterseiten auf dem Boden aufliegen, und die Befestigungssockel Öffnungen zum Hindurchführen von im Boden verankerbaren Befestigungselementen aufweisen.

Schutzvorrichtungen für Regalpfosten kommen insbesondere bei Lagerregalen in Großregallagern zum Einsatz. Solche Lagerregale weisen vertikale Regalpfosten auf, die durch quer angeordnete Traversen miteinander verbunden sind. Ferner umfassen die Lagerregale horizontale Auflagen zum Absetzen der Stückgüter. Die Auflagen befinden sich an parallel zueinander angeordneten Tragprofilen. Das Ein- und Auslagern von Stückgütern in die Regale erfolgt in der Regel mit Gabelstaplern, wodurch es zu Zusammenstößen der Gabelstapler mit den Regalpfosten kommen kann. Insbesondere kann es zu Zusammenstößen der Gabelstapler-Gabeln mit den Regalpfosten kommen, wodurch entweder die Pfosten selbst und damit die statische Grundstruktur des Lagerregals oder auch die in den Regalen eingelagerten Stückgüter Schaden nehmen können. Daher sind Schutzvorrichtungen, die die Regalpfosten umgeben und Stoßbelastungen vor dem Zusammenstoß von Gabelstapler und Regalpfosten abfedern, von besonderem Interesse für die Betreiber der Regallager. Solche Schutzvorrichtungen sind in der Regel fest im Boden verankert, sind aber oft auch mit dem zu schützenden Regalpfosten verbunden.

Eine Schutzvorrichtung mit den Merkmalen des Oberbegriffs ist u. a. aus der EP 2 565 134 B1 bekannt. Bei der dortigen Konstruktion umgibt ein einen U-förmigen Querschnitt aufweisender Grundkörper aus Metallblech den vertikal auf dem Boden aufstehenden Pfosten auf dessen unterem Längsabschnitt. Der Grundkörper umgibt den Pfosten auf drei Seiten, wodurch der Grundkörper eine Öffnung aufweist durch die der Pfosten hindurchführt. Gebildet ist der Grundkörper aus einer segmentierten Vorderwand sowie zwei Seitenwänden. Der Grundkörper ist über nach außen gebogene Befestigungssockel im Boden verankert. Zusätzlich ist zwischen dem Grundkörper und der Vorderseite des Pfostens ein Gummipuffer vorgesehen. Die Belastungen eines Stoßes sollen also, zumindest teilweise, auch über den Pfosten abgeführt werden.

Bei Zusammenstößen von z. B. Gabelstaplern mit Regalpfosten bzw. Schutzvorrichtungen können insbesondere Frontal- aber auch Querkräfte auf den Pfosten bzw. die Schutzvorrichtung wirken. Mit Frontalkräften sind an dieser Stelle jene Kräfte gemeint, dessen Kraftvektoren im Wesentlichen senkrecht zur Vorderwand stehen. Beim Schwenken einer Gabelstapler-Gabel (z. B. bei einem Drehmanöver) und einem darauf folgenden seitlichen Zusammenstoß mit der Schutzvorrichtung können zudem Kräfte auch auf die Seitenwände der Schutzvorrichtung wirken.

Zwar puffern Schutzvorrichtungen, wie sie u. a. aus der EP 2 565 134 B1 bekannt sind, plötzlich auftretende Frontalkräfte, also jene Krafteinwirkungen auf die Vorderwand des U-förmigen Grundkörpers, zufriedenstellend ab, nicht jedoch andere Kräfte und insbesondere solche Kräfte, die zu einem Einknicken der Seitenwände führen können. Selbst bei frontaler Krafteinwirkung kann es zu einem Einknicken der Seitenwände kommen.

Die DE 20 2016 002 472 U1 offenbart ferner eine Schutzvorrichtung für einen Lagerpfosten mit einem einen im Wesentlichen quadratischen Horizontalquerschnitt aufweisenden Grundkörper (mit abgerundeten Ecken) aus mehrfach gekantetem Stahlblech, der einen unteren Längsabschnitt des Regalpfostens umgibt. Der Grundkörper setzt sich zusammen aus einer Vorderwand und an die Vorderwand anschließenden linken und rechten Seitenwänden, die sich ausgehend von der Vorderwand jeweils nach hinten erstrecken. Auf der vierten Seite des Grundkörpers weist dieser eine ebenfalls vertikale Rückwand auf, welche die rückwärtigen Ränder der Seitenwände miteinander verbindet.

Des Weiteren geht aus der DE 20 2015 007 354 U1 eine Schutzvorrichtung für einen Lagerpfosten hervor, die ebenfalls einen Grundkörper mit einem im Wesentlichen U-förmigen Horizontalquerschnitt aufweist. Der Grundkörper setzt sich aus einer Vorderwand und an die Vorderwand anschließenden linken und rechten Seitenwänden mit rückwärtigen Rändern zusammensetzt. Die rückwärtigen Ränder der Seitenwände verlaufen schräg zur Vertikalen, wobei die Höhe der Seitenwände über die Horizontalerstreckung der Seitenwände nach hinten abnimmt. Im Bereich der Vorderwand ist eine Verstärkungsplatte zur Stabilisierung sowie zur Erhöhung der Widerstandsfähigkeit der Vorderwand angeordnet.

Die FR 2 941 974 A1 offenbart die Merkmale des Oberbegriffs des Anspruchs 1 und offenbart außerdem, dass die Seitenwände rückwärtigen Ränder aufweisen welche schräg zur Vertikalen verlaufen, indem zumindest auf einem Teil der Horizontalerstreckung der Seitenwände die Höhe der Seitenwände nach hinten abnimmt.

Der vorliegenden Erfindung liegt daher die **Aufgabe** zugrunde, bei einer Schutzvorrichtung mit den eingangs genannten Merkmalen deren Stabilität zu erhöhen und die Verformungsmöglichkeiten zu minimieren.

Zur **Lösung** dieser Aufgabe wird für eine Schutzvorrichtung mit den eingangs genannten Merkmalen vorgeschlagen, dass die Seitenwände an ihren rückwärtigen Rändern durch eine Verstärkungsplatte miteinander verbunden sind, wobei die rückwärtigen Ränder schräg zur Vertikalen verlaufen, indem zumindest auf einem Teil der Horizontalerstreckung der Seitenwände die Höhe der Seitenwände nach hinten abnimmt.

Mittels einer solchen Verstärkungsplatte sind die Seitenwände des Grundkörpers der Schutzvorrichtung fest miteinander verbunden und auf diese Weise quer gegeneinander abgestützt. Bei auf die Front- oder Seitenwände einwirkenden Kräften, wirkt die Verstärkungsplatte einem möglichen Abknicken bzw. Verbiegen der Seitenwände entgegen. Die Verstärkungsplatte verbindet die Seitenwände an deren rückwärtigen Rändern, wobei darunter zu verstehen ist, dass sich diese Ränder an der Rückseite des zu schützenden Regalpfostens befinden. Auch die Verstärkungsplatte befindet sich daher an der Rückseite des zu schützenden Regalpfostens. Die Verstärkungsplatte vermindert somit die Verformungsmöglichkeiten der Seitenwände. Auch die Stabilität der Vorderwand bzw. die Gesamtstabilität des Grundkörpers wird durch die Verstärkungsplatte erhöht. Sie trägt zu einer insgesamt verbesserten und gleichmäßigeren Kraftableitung bei. Die Aufnahme der Stoßbelastungen erfolgt allein durch die Vorrichtung selbst. Diese leitet die Kräfte in den Boden ab, ohne dass es notwendig ist, einen Teil der Kräfte zum Beispiel mittels eines Gummipuffers in die Stütze abzuleiten.

Es ist vorstellbar, die Verstärkungsplatte so gross zu bemessen, dass sie sich über die gesamte Länge der vorzugsweise schräg zur Vertikalen verlaufenden, rückwärtigen Ränder erstreckt. Aber auch eine kürzere Ausführung oder die gleichzeitige Verwendung mehrerer Verstärkungsplatten ist möglich. Dies, wie auch die Dicke und die Gestalt der Verstärkungsplatte, kann flexibel an die Anforderungen des Kunden angepasst werden.

Die Verstärkungsplatte kann direkt an den rückwärtigen Rändern der beiden Seitenwände befestigt sein, zum Beispiel mittels zweier Schweißnähte. Bevorzugt wird jedoch eine Ausgestaltung, bei der die Seitenwände an ihren rückwärtigen Rändern zusätzlich mit aufeinander zu gewinkelten Randabschnitten versehen sind, welche die Stabilität der Seitenwände verbessern. Die mindestens eine Verstärkungsplatte ist dann an diesen Randabschnitten befestigt.

Gemäß einer vorteilhaften Ausgestaltung der Erfindung sind die Befestigungssockel an den unteren Enden der Seitenwände und der Vorderwand angeordnet. Dies erlaubt eine gleichmäßige Befestigung bzw. Verankerung des Grundkörpers im Boden und begünstigt eine gleichmäßige Kraftableitung. Die Gesamtstabilität der Schutzvorrichtung wird dadurch erhöht.

In diesem Sinne ist es besonders vorteilhaft, wenn zwei der Befestigungssockel rechtwinklig nach innen abgewinkelte Leisten an den unteren Rändern der Seitenwände sind. Diese abgewinkelten Leisten befinden sich mit ihrer gesamten Länge hinter dem zu schützenden Regalpfosten, d. h. an dessen Rückseite. Dadurch lässt sich die Schutzvorrichtung relativ schmal gestalten.

### (weiter mit Seite 4 der Beschreibungsseiten)

Auch ist vorstellbar, die Befestigungssockel alternativ oder zusätzlich als rechtwinklig nach außen abgewinkelte Leisten der Seitenwände auszubilden.

Gemäß einer besonders vorteilhaften Ausgestaltung der Erfindung gehen die Leisten an ihren vorderen Enden jeweils in eine nach oben abgewinkelte Verstärkungslasche über, die mit der Innenfläche der jeweiligen Seitenwand verbunden und insbesondere verschweißt ist. Die Verstärkungslaschen stützen die Seitenwände zusätzlich ab und können auf die Schutzvorrichtung einwirkende Kräfte unmittelbar in Richtung des Befestigungssockels und damit in den Boden ableiten. Auch verhindern sie als Verstärkungselemente die Verformungsneigung der Seitenwände bei Krafteinwirkungen.

Der Verwender der Schutzvorrichtung hat die Option, den Grundkörper derart anzuordnen, dass die Verstärkungslaschen unmittelbar an dem Regalpfosten anliegen. Dies kann für eine zusätzliche Abstützung der Schutzvorrichtung sorgen. Dies ist jedoch keine zwingende Voraussetzung. Vielmehr ist der Grundkörper der Schutzvorrichtung vorzugsweise derart ausgelegt, dass sich die Innenflächen der Seitenwände und der Vorderwand in einem Abstand zu dem Regalpfosten befinden, also nicht unmittelbar an diesem anliegen. Dies ist insbesondere dann von Vorteil, wenn Kabelstränge entlang der Regalpfosten geführt sind und ein Kontakt mit der Schutzvorrichtung möglichst vermieden werden soll. Die Größenverhältnisse des Grundkörpers bzw. der Schutzvorrichtung sind flexibel an die Erfordernisse des Kunden anpassbar.

Auch kann es im Rahmen der Erfindung vorteilhaft sein, dass einer der Befestigungssockel eine mit der Vorderwand und den Seitenwänden verschweißte Basisplatte ist. Neben den Leisten der Seitenwände kann also die Basisplatte einen weiteren Befestigungssockel darstellen. Im Gegensatz zu den Leisten ist die Basisplatte jedoch im vorderen Bereich der Schutzvorrichtung noch vor dem Regalpfosten vorgesehen. Sie stabilisiert somit insbesondere den vorderen Teil der Schutzvorrichtung.

Damit die Schutzvorrichtung am Boden befestigt bzw. verankert werden kann, weisen die Leisten und die Basisplatte Öffnungen zur Aufnahme von im Boden verankerten Befestigungselementen auf. Die Befestigungselemente führen durch die Öffnungen hindurch und sind in bodenseitige Bohrungen eingeschraubt bzw. in diesen verankert. Vorzugsweise sind die Befestigungselemente Bolzen. Zur Verankerung der Bolzen im Boden kommt nahezu jede herkömmliche Möglichkeit zur Befestigung von Bolzen in Bohrungen oder Löchern in Betracht. Beispielsweise können die Bolzen über Dübel befestigt werden. Selbst ein Einbetonieren der Bolzen ist vorstellbar.

In einer weiteren vorteilhaften Ausgestaltung weisen die Verstärkungsplatte und die aufeinander zu gewinkelten Randabschnitte zueinander korrespondierende Öffnungen auf, durch welche Schrauben oder Niete hindurchgeführt sind. Somit ist eine stabile Befestigung der Verstärkungsplatte an den hinteren Rändern der Seitenwände möglich. Die Zahl der Öffnungen kann dabei variieren.

Ferner ist es vorteilhaft, dass sich die Leisten nach hinten über die rückwärtigen Ränder der Seitenwände hinaus erstrecken, und dort flach auf dem Boden aufliegende Laschen bilden. Auch die Laschen weisen Öffnungen zur Aufnahme von im Boden verankerten Befestigungselementen auf. Dies trägt zu einer weiteren Stabilisierung der Schutzvorrichtung bei.

Vorteilhafterweise ist die Vorderwand segmentiert ausgebildet ist und besteht aus einem Zentralsegment und links und rechts an das Zentralsegment anschließenden Segmenten, wobei die Segmente schräg zu dem Zentralsegment angeordnet sind. Bei plötzlich auftretenden Stoßbelastungen können sich die Segmente geringfügig gegeneinander verschieben und/oder zusammenstauchen. Dadurch werden Kräfte effizient abgeleitet. Die Segmente wirken frontalen oder seitlichen Stößen nach Art einer dämpfenden Feder entgegen.

Gemäß einer weiteren Ausgestaltung der Erfindung ist zwischen den Innenflächen der Vorderwand und der Vorderseite des Pfostens ein Freiraum vorgesehen. Denn die erfindungsgemäße Schutzvorrichtung weist eine hohe eigene Stabilität auf. Eine zusätzliche Abstützung und damit Übertragung von Kräften an den Regalpfosten ist daher nicht erforderlich.

In einer weiteren vorteilhaften Ausgestaltung der Schutzvorrichtung weisen die Seitenwände einen ersten Seitenabschnitt von im Wesentlichen gleichbleibender Höhe und einen zweiten Seitenabschnitt von nach hinten abnehmender Höhe auf, wobei sich der erste Seitenabschnitt an die Vorderwand anschließt.

Es ist vorteilhaft, wenn die Höhe der Seitenwände nach hinten abnehmend ausgebildet ist, so dass die hinteren Ränder der Seitenwände jeweils einen Verlauf schräg nach unten aufweisen, an welchem dann die aufeinander zu gerichteten Randabschnitte ausgebildet sein können. Eine solche Ausbildung ist einerseits gewichtssparend, andererseits trägt der schräge Verlauf der hinteren Ränder der Seitenwände zu einer effizienten Kraftableitung bei. Die Seitenwände können zudem bei einer frontalen Krafteinwirkung auf die Vorderwand als eine Stütze für die Vorderwand fungieren.

Weitere Merkmale und Vorteile der vorliegenden Erfindung ergeben sich aus den Zeichnungen und Ausführungsbeispielen, anhand derer die Erfindung beispielhaft näher erläutert werden soll, ohne die Erfindung auf diese zu beschränken. Die Zeichnungen zeigen:
- Fig. 1: eine perspektivische Ansicht der erfindungsgemäßen Schutzvorrichtung im zusammengebauten Zustand;
- Fig. 2: eine perspektivische Ansicht der erfindungsgemäßen Schutzvorrichtung im zusammengebauten Zustand, jedoch mit verdeckten Linien;
- Fig. 3: eine seitliche Schnittdarstellung der erfindungsgemäßen Schutzvorrichtung;
- Fig. 4: eine Ansicht von unten des Grundkörpers samt Verstärkungsplatte und Befestigungssockeln.

Nachfolgend ist die erfindungsgemäße Schutzvorrichtung anhand der Figuren näher beschrieben. Die Schutzvorrichtung eignet sich zum Schutz von vertikal auf dem Boden aufstehenden Pfosten 1. Diese können beispielsweise Bestandteil von Lagerregalen sein können. Solche Lagerregale werden häufig zur Einlagerung von Stückgütern in Lagerhallen verwendet. Bei Be- und Entladevorgängen mit Gabelstaplern kommt es häufig zu Zusammenstößen der Gabelstaplergabeln mit den Regalpfosten 1 der Lagerregale. Dabei können sowohl die Regalpfosten 1 selbst, das Lagerregal oder die Stückgüter beschädigt werden. Mit geeigneten Schutzvorrichtungen ist es möglich die beim Zusammenstoß auf die Regalpfosten 1 einwirkenden Kräfte abzufedern bzw. abzudämpfen.

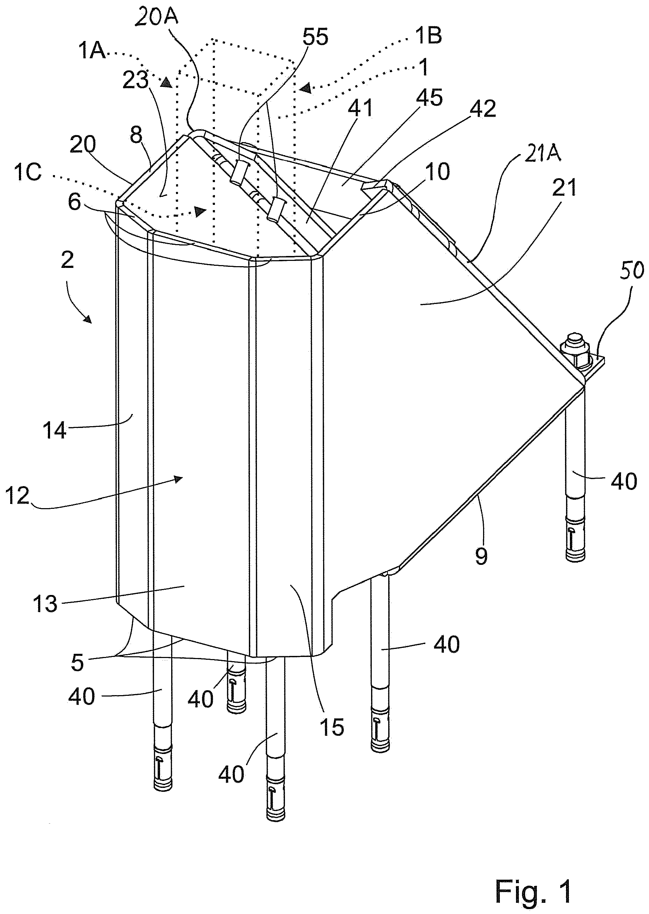

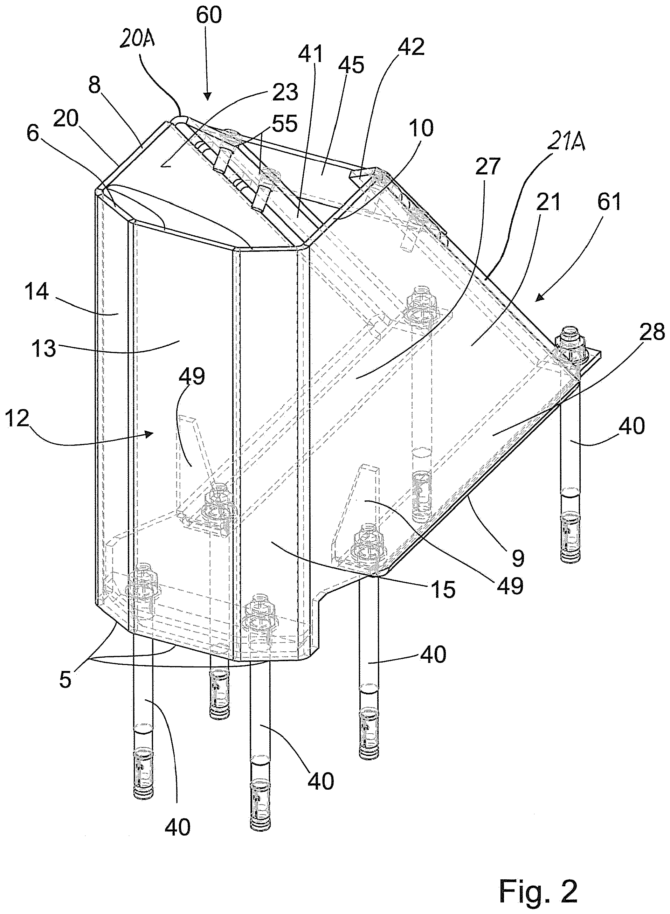

Die Figur 1 gibt die erfindungsgemäße Schutzvorrichtung im zusammengebauten Zustand wieder, also in jener Form wie sie zum Schutz von Regalpfosten 1 gegen Stoßeinwirkungen eingesetzt wird. An dieser Stelle sei angemerkt, dass die erfindungsgemäße Schutzvorrichtung nicht auf eine Verwendung von Regalpfosten beschränkt ist. Sie eignet sich zum Schutz von jeglichen vertikal angeordneten Pfosten, beispielsweise Pfosten von Gartenzäunen oder Ampeln. Figur 2 zeigt dieselbe Schutzvorrichtung wie Figur 1, jedoch auch jene in Figur 1 verdeckten Linien.

Wie die Figur 1 zeigt, besteht die Schutzvorrichtung aus einem Grundkörper 2 und weiteren damit verbundenen bzw. zusammenwirkenden Bauteilen. Der Grundkörper 2 wird einstückig durch Biegen von Stahlblech gefertigt. Das Stahlblech wird dabei derart gebogen, dass sich der Grundkörper 2 aus einer Vorderwand 12, und an die Vorderwand 12 anschließenden linken und rechten Seitenwänden 20, 21 zusammensetzt. Der Grundkörper 2 weist einen U-förmigen Horizontalquerschnitt auf, indem sich die Seitenwände 20, 21 ausgehend von der Vorderwand 12 nach hinten erstrecken und sie zugleich den hinteren Abschluss des Grundkörpers 2 bilden.

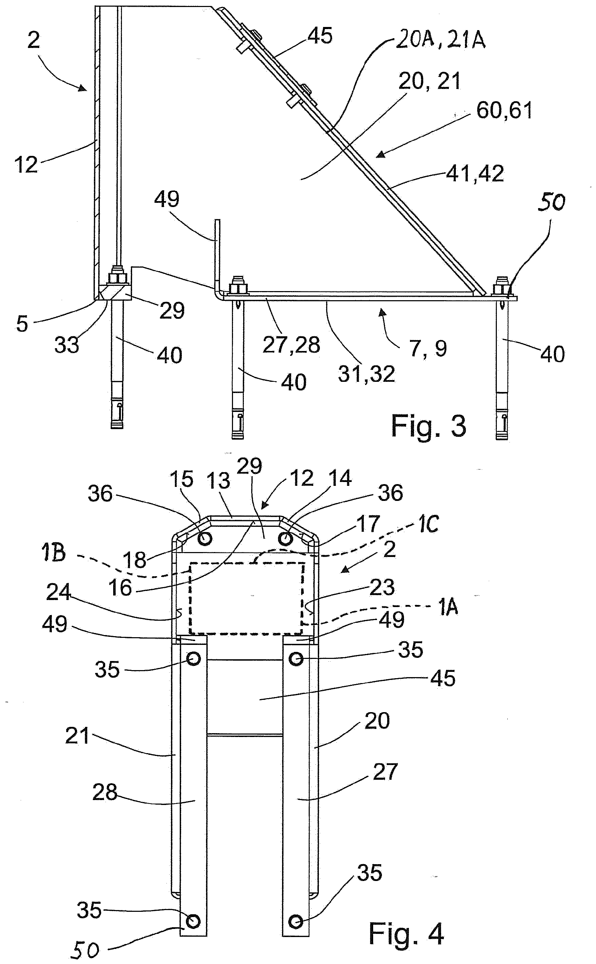

Die im Horizontalquerschnitt U-Form des Grundkörpers 2 erlaubt es, den Grundkörper 2 und somit die Schutzvorrichtung in Bezug auf einen Regalpfosten 1 derart anzuordnen, dass der Grundkörper 2 über seine gesamte Länge einen unteren Längsabschnitt des in Fig. 4 gestrichelt wiedergegebenen Regalpfostens 1 auf zumindest drei Seiten 1A, 1B, 1C umgibt. Der Regalpfosten 1 ist also zumindest von der Vorderwand 12 und den Seitenwänden 20, 21 des Grundkörpers 2 umgeben. Dabei sind die Innenflächen 16, 17, 18 der Vorderwand 12 und die Innenflächen 23, 24 der Seitenwände 20, 21 dem Pfosten 1 zugewandt. Zumindest zwischen den Innenflächen 16, 17, 18 der Vorderwand und der Außenseite 1C des Pfostens 1 befindet sich ein Freiraum, d. h. ein Abstand. Vorzugsweise befindet sich auch zu den Seiten 1A, 1B ein Abstand. Anders ausgedrückt ist der Regalpfosten 1 senkrecht durch die Schutzvorrichtung hindurchgeführt bzw. durch die von der U-Form nach außen begrenzte Öffnung des Grundkörpers 2, ohne die Schutzvorrichtung zu berühren.

Wie in den Figuren 1 und 2 dargestellt, ist die Vorderwand 12 des Grundkörpers 2 segmentiert ausgebildet. Demnach setzt sich die Vorderwand 12 aus einem Zentralsegment 13 sowie links und rechts an das Zentralsegment 13 anschließenden Segmenten 14, 15 zusammen. Dabei sind die Segmente 14, 15 schräg zu dem zentralen Segment 13 angeordnet, bzw. nach hinten abgebogen sind. Die Innenflächen 16, 17, 18 des Zentralsegments 13 und der Segmente 14, 15 sind dem Pfosten 1 zugewandt. Vorzugsweise liegt der Winkel um den die Segmente 14, 15 relativ zu dem Zentralsegment 13 abgebogen sind in einem Bereich von 30 bis 50°. Die Seitenwände 20, 21 des Grundkörpers 2 schließen also unmittelbar an die Segmente 14, 15 an und erstrecken sich ausgehend von diesen nach hinten. Besonders bevorzugt ist dabei, dass die Seitenwände 20, 21 im rechten Winkel relativ zu dem Zentralsegment 13 angeordnet sind.

Der Grundkörper 2 steht im montierten Zustand mit an der Vorderwand 12 und den Seitenwänden 20, 21 ausgebildeten unteren Rändern 5, 7, 9 auf dem Boden auf. Wie insbesondere anhand der Darstellung nach Figur 2 anhand der im Vergleich zu Figur 1 verdeckten Linien zu erkennen ist, weisen die Seitenwände 20, 21 zumindest abschnittsweise an ihren unteren Enden nach innen abgewinkelte Leisten 27, 28 auf. Die Leisten 27, 28 der linken und rechten Seitenwand 20, 21 sind aufeinander zu fluchtend angeordnet und liegen mit ihren jeweiligen Unterseiten 31, 32 plan auf dem Boden auf.

Die Leisten 27, 28 befinden sich mit ihrer gesamten horizontalen Länge auf der Rückseite des zu schützenden Regalpfostens 1 (Fig. 4). Die Leisten weisen Öffnungen 35 zur Aufnahme von im Boden verankerten Befestigungselementen 40 auf. Vorteilhaft ist die Verwendung von Befestigungsbolzen. Die Leisten 27, 28 sind also zwei der Befestigungssockel der Schutzvorrichtung. Zu Befestigung der Befestigungselemente 40 an den Leisten 27, 28 eigenen sich herkömmliche Muttern und Unterlegscheiben.

Um die Stabilität der Seitenwände 20, 21 und damit auch der Schutzvorrichtung insgesamt zu erhöhen, sind an den Leisten 27, 28 bzw. an deren vorderen Enden jeweils nach oben abgewinkelte Verstärkungslaschen 49 vorgesehen, die mit der Innenfläche 23, 24 der jeweiligen Seitenwand 20, 21 verschweißt sind (siehe Figuren 2, 3). Vorzugsweise verjüngen sich die Verstärkungslaschen 49 von unten nach oben. Sie weisen dann an ihrem unteren Ende eine größere Breite auf, als an ihrem oberen Ende.

Die Leisten 27, 28 wie auch die zu diesen winklig angeordneten Verstärkungslaschen 49 befinden sich im Innenraum des Grundkörpers 2. Die Verstärkungslaschen 49 können sich mit ihrer den Innenflächen 16, 17, 18 der Vorderwand 12 zugewandten Vorderseite von hinten her an dem Regalpfosten 1 abstützen, sofern dieser dazu geeignete Maße aufweist, und sofern dies gewünscht ist.

Wie in den Figuren 2, 3 und 4 dargestellt, ist der Grundkörper 2 noch über mindestens einen weiteren Befestigungssockel auf dem Boden verankert. Dazu ist im vorderen Bereich des Grundkörpers 2 eine Basisplatte 29 als Befestigungssockel vorgesehen, die zum einen mit der Vorderwand 12 und zum anderen mit beiden Seitenwänden 20, 21 verschweißt ist. Die Basisplatte 29 liegt an den Innenflächen 16, 17, 18 der Vorderwand 12 bzw. des Zentralsegments 13 und der Segmente 14, 15 an. Zudem liegt die Basisplatte 29 an einem vorderen Abschnitt der Seitenwände 20, 21 an. Mit ihrer Unterseite 33 liegt die Basisplatte 29 plan auf dem Boden auf. Wie die Figur 4 zu erkennen gibt, weist auch die Basisplatte 29 Öffnungen 36 zur Aufnahme von Befestigungselementen 40 auf. Die Befestigungselemente 40 sind durch die Öffnungen 36 hindurchgeführt (Fig. 2, 3) und werden im Boden verankert.

Wie in Figuren 1 und 2 dargestellt, nimmt die Höhe der Seitenwände 20, 21 nach hinten mehr und mehr ab, wodurch die der Vorderwand 12 abgewandten rückwärtigen Ränder 20A, 21A der beiden Seitenwände 20, 21 schräg zur Vertikalen verlaufen. Demnach weisen die Seitenwände 20, 21 auf einem ersten, an die Vorderwand 12 anschließenden Abschnitt eine größere Höhe auf als auf einem hinteren, zweiten Seitenabschnitt.

Ausgehend von den oberen Rändern 8, 10 der ersten Seitenabschnitte weisen die Seitenwände 20, 21 schräg nach unten, auf die Leisten 27, 28 zulaufende Abschnitte 60, 61 auf. Nach hinten definieren die Abschnitte 60, 61 die Länge der zweiten Seitenabschnitte. Die oberen Ränder 8, 10 der ersten Seitenabschnitte schließen nach oben mit den oberen Rändern 6 der Vorderwand bzw. des Zentralsegments 13 und der Segmente 14, 15 ab.

Die Seitenwände 20, 21 sind an ihren schräg verlaufenden hinteren Rändern 20A, 21A mit aufeinander zu abgewinkelten Randabschnitten 41, 42 versehen, die vorzugsweise durch Umformen der Seitenwände hergestellt sind. Die Randabschnitte 41, 42 sind über eine Verstärkungsplatte 45 miteinander verbunden. Die Verstärkungsplatte 45 kann aus Stahlblech gefertigt sein. Die Randabschnitte 41, 42 werden also durch Biegen der rückwärtigen Randbereiche der Seitenwände 20, 21 erzeugt und sind somit Bestandteil des einstückigen Grundkörpers 2.

Die Randabschnitte 41, 42 befinden sich mit ihrer gesamten Länge hinter dem zu schützenden Pfosten 1, d. h. an dessen Rückseite. Auch die Verstärkungsplatte 45 befindet sich an der Rückseite des Pfostens 1. Dadurch lässt sich die Schutzvorrichtung relativ schmal gestalten.

Die Randabschnitte 41, 42 erstrecken sich entlang der gesamten, schräg von oben nach unten verlaufenden hinteren Ränder 20A, 21A der Seitenwände 20, 21. Sie erstrecken sich ausgehend von dem hinteren Ende der oberen Ränder 8, 10 entlang der schräg nach unten verlaufenden Abschnitte 60, 61 bis hin zu den Leisten 27, 28. Die hinteren Enden der aufeinander zu gewinkelten Ränder 41, 42 sind mit den Leisten 27, 28 verschweißt.

Nach hinten erstrecken sich die Leisten 27, 28 noch über das hintere Ende der Seitenwände 20, 21 hinaus und bilden dort flache, auf dem Boden aufliegende Laschen 50. Die Laschen 50 weisen Öffnungen 35 zur Aufnahme von Befestigungselementen 40 auf, die im Boden verankert werden.

An den Randabschnitten 41, 42 wie auch an der Verstärkungsplatte 45 sind zueinander korrespondierende Öffnungen 55 vorgesehen, durch die Bolzen und/oder Niete hindurchführbar sind. Vermöge dessen ist die Verstärkungsplatte 45 mit den Randabschnitten 41, 42 fest verbunden.

Die Verstärkungsplatte 45 schließt den U-Förmigen Querschnitt der Schutzvorrichtung hinten ab (Fig. 4). Somit ist der Regalpfosten 1 bei vollständig montierter Schutzvorrichtung an allen Seiten durch Bauteile der Schutzvorrichtung umgeben. Der Pfosten 1 ist also von der Vorderwand 12, den Seitenwänden 20, 21 und der Verstärkungsplatte 45 umschlossen. Zwischen den Innenflächen 16, 17, 18 der Vorderwand 12 und der Vorderseite 1C des Pfostens 1 liegt ein Freiraum. Vorzugsweise besteht auch seitlich ein gewisser Freiraum.

### Bezugszeichenliste

- 1: Pfosten, Regalpfosten
- 1A: Seite
- 1B: Seite
- 1C: Seite
- 2: Grundkörper
- 5: unterer Rand
- 6: oberer Rand
- 7: unterer Rand
- 8: oberer Rand
- 9: unterer Rand
- 10: oberer Rand
- 12: Vorderwand
- 13: Zentralsegment
- 14: linkes Segment
- 15: rechtes Segment
- 16: Innenfläche
- 17: Innenfläche
- 18: Innenfläche
- 20: linke Seitenwand
- 20A: rückwärtiger Rand
- 21: rechte Seitenwand
- 21A: rückwärtiger Rand
- 23: Innenfläche
- 24: Innenfläche
- 27: Leiste
- 28: Leiste
- 29: Basisplatte
- 31: Unterseite
- 32: Unterseite
- 33: Unterseite
- 35: Öffnungen
- 36: Öffnungen
- 40: Befestigungselemente
- 41: Randabschnitt
- 42: Randabschnitt
- 45: Verstärkungsplatte
- 49: Verstärkungslasche
- 50: Lasche
- 55: Öffnungen
- 60: Abschnitt
- 61: Abschnitt

## Patentansprüche

1. Schutzvorrichtung für einen Regalpfosten, mit einem einen U-förmigen Horizontalquerschnitt aufweisenden Grundkörper (2) aus mehrfach gekantetem Stahlblech, der einen unteren Längsabschnitt des Regalpfostens (1) zumindest auf drei Seiten (1A, 1B, 1C) umgibt, wobei sich der Grundkörper (2) zusammensetzt aus einer Vorderwand (12) und an die Vorderwand (12) anschließenden linken und rechten Seitenwänden (20, 21), die sich ausgehend von der Vorderwand (12) jeweils nach hinten erstrecken und dort jeweils einen rückwärtigen Rand bilden, wobei die Innenflächen (16, 17, 18, 23, 24) der Vorderwand (12) und der Seitenwände (20, 21) dem Pfosten (1) zugewandt sind, sowie mit an dem Grundkörper (2) angeordneten Befestigungssockeln zur Bodenmontage der Schutzvorrichtung, wobei die Befestigungssockel mit an ihnen ausgebildeten Unterseiten (31, 32, 33) auf dem Boden aufliegen, und die Befestigungssockel Öffnungen (35, 36) zum Hindurchführen von im Boden verankerbaren Befestigungselementen aufweisen, **dadurch gekennzeichnet, dass** die Seitenwände (20, 21) an ihren rückwärtigen Rändern (20A, 21A) durch eine Verstärkungsplatte (45) miteinander verbunden sind, wobei die rückwärtigen Ränder (20A, 21A) schräg zur Vertikalen verlaufen, indem zumindest auf einem Teil der Horizontalerstreckung der Seitenwände (20, 21) die Höhe der Seitenwände (20, 21) nach hinten abnimmt.

2. Schutzvorrichtung nach Anspruch 1, **dadurch gekennzeichnet, dass** die Seitenwände (20, 21) an ihren rückwärtigen Rändern (20A, 21A) aufeinander zu gewinkelte Randabschnitte (41, 42) aufweisen, an denen die Verstärkungsplatte (45) befestigt ist.

3. Schutzvorrichtung nach einem der Ansprüche 1 oder 2, **dadurch gekennzeichnet, dass** die Seitenwände (20, 21) einen ersten Seitenabschnitt von im Wesentlichen gleicher Höhe und einen zweiten Seitenabschnitt von nach hinten abnehmender Höhe aufweisen, wobei sich der erste Seitenabschnitt an die Vorderwand anschließt.

4. Schutzvorrichtung nach einem der Ansprüche 1 bis 3, **dadurch gekennzeichnet, dass** die Befestigungssockel an den unteren Rändern der Seitenwände (20, 21) und der Vorderwand (12) angeordnet sind.

5. Schutzvorrichtung nach einem der Ansprüche 1 bis 4, **dadurch gekennzeichnet, dass** zwei der Befestigungssockel rechtwinklig nach innen abgewinkelte Leisten (27, 28) an den unteren Rändern der Seitenwände (20, 21) sind, wobei die Unterseiten der Leisten (27, 28) auf dem Boden aufliegen.

6. Schutzvorrichtung nach Anspruch 5, **dadurch gekennzeichnet, dass** die Leisten (27, 28) an ihren vorderen Enden jeweils in eine nach oben abgewinkelte Verstärkungslasche (49) übergehen, die mit der Innenfläche (23, 24) der jeweiligen Seitenwand (20, 21) verschweißt ist.

7. Schutzvorrichtung nach einem der Ansprüche 4 bis 6, **dadurch gekennzeichnet, dass** einer der Befestigungssockel eine mit der Vorderwand (12) und beiden Seitenwänden (20, 21) verschweißte Basisplatte (29) ist.

8. Schutzvorrichtung nach Anspruch 7, **dadurch gekennzeichnet, dass** die Leisten (27, 28) und die Basisplatte (29) Öffnungen (35, 36) zum Hindurchführen von im Boden verankerbaren Befestigungselementen aufweisen.

9. Schutzvorrichtung nach Anspruch 5 oder 6, **dadurch gekennzeichnet, dass** sich die Leisten (27, 28) nach hinten über die rückwärtigen Ränder der Seitenwände (20, 21) hinaus erstrecken, und dort flach auf dem Boden aufliegende Laschen (50) bilden.

10. Schutzvorrichtung nach Anspruch 9, **dadurch gekennzeichnet, dass** die Laschen (50) Öffnungen (35) zur Aufnahme von im Boden verankerbaren Befestigungselementen (40) aufweisen.

11. Schutzvorrichtung nach einem der vorangehenden Ansprüche, **dadurch gekennzeichnet, dass** die Vorderwand (12) segmentiert ausgebildet ist und aus einem Zentralsegment (13) und links und rechts an das Zentralsegment (13) anschließenden Segmenten (14, 15) besteht, wobei die Segmente (14, 15) schräg zu dem Zentralsegment (13) angeordnet sind.

12. Schutzvorrichtung nach Anspruch 2, **dadurch gekennzeichnet, dass** die Verstärkungsplatte (45) und die aufeinander zu gewinkelten Randabschnitte (41, 42) zueinander korrespondierende Öffnungen (55) aufweisen, durch welche Schrauben oder Niete hindurchgeführt sind.

## Claims

1. Protection device for a storage rack post, having a main body (2) which has a U-shaped horizontal cross section and is made from steel sheet bent multiple times and surrounds a lower longitudinal portion of the storage rack post (1) on at least three sides (1A, 1B, 1C), wherein the main body (2) is composed of a front wall (12) and right and left lateral walls (20, 21) that adjoin the front wall (12) and, proceeding from the front wall (12), extend in each case towards the rear and thereon form in each case one rearward periphery, wherein the internal faces (16, 17, 18, 23, 24) of the front wall (12) and of the lateral walls (20, 21) face the post (1),
as well as having fastening plinths which for assembling the protection device on the floor are disposed on the main body (2), wherein the fastening plinths by way of lower sides (31, 32, 33) configured thereon bear on the floor, and the fastening plinths have openings (35, 36) for passing through fastening elements that are able to be anchored in the floor,
**characterized in that** the lateral walls (20, 21) on the rearward peripheries (20A, 21A) thereof are connected to one another by a reinforcement plate (45), wherein the rearward peripheries (20A, 21A) run obliquely to the vertical **in that** the height of the lateral walls (20, 21) at least on part of the horizontal extent of the lateral walls (20, 21) decreases toward the rear.

2. Protection device according to Claim 1, **characterized in that** the lateral walls (20, 21) on the rearward peripheries (20A, 21A) thereof have peripheral portions (41, 42) which are angled towards one another and to which the reinforcement plate (45) is fastened.

3. Protection device according to one of Claims 1 or 2,
**characterized in that** the lateral walls (20, 21) have a first lateral portion of a substantially consistent height, and a second lateral portion of a height that decreases towards the rear, wherein the first lateral portion adjoins the front wall.

4. Protection device according to one of Claims 1 to 3,
**characterized in that** the fastening plinths are disposed on the lower peripheries of the lateral walls (20, 21) and of the front wall (12).

5. Protection device according to one of Claims 1 to 4,
**characterized in that** two of the fastening plinths are inwardly angled strips (27, 28) on the lower peripheries of the lateral walls (20, 21), wherein the lower sides of the strips (27, 28) bear on the floor.

6. Protection device according to Claim 5, **characterized in that** the strips (27, 28) on the front ends thereof transition in each case to an upwardly angled reinforcement tab (49) which is welded to the internal face (23, 24) of the respective lateral wall (20, 21).

7. Protection device according to one of Claims 4 to 6,
**characterized in that** one of the fastening plinths is a base plate (29) which is welded to the front wall (12) and both lateral walls (20, 21).

8. Protection device according to Claim 7, **characterized in that** the strips (27, 28) and the base plate (29) have openings (35, 36) for passing through fastening elements that are able to be anchored in the floor.

9. Protection device according to Claim 5 or 6, **characterized in that** the strips (27, 28) towards the rear extend beyond the rearward peripheries of the lateral walls (20, 21) and thereon form tabs (50) that bear flat on the floor.

10. Protection device according to Claim 9, **characterized in that** the tabs (50) have openings (35) for receiving fastening elements (40) that are able to be anchored in the floor.

11. Protection device according to one of the preceding claims,
**characterized in that** the front wall (12) is configured in segments and is composed of a central segment (13) and segments (14, 15) that adjoin the central segment (13) on the right and left, wherein the segments (14, 15) are disposed so as to be oblique in relation to the central segment (13).

12. Protection device according to Claim 2, **characterized in that** the reinforcement plate (45) and the peripheral portions (41, 42) which are angled towards one another have mutually corresponding openings (55) through which screws or rivets are passed through.

## Revendications

1. Dispositif de protection pour un montant de rayonnage, comprenant un corps de base (2) présentant une section transversale horizontale en forme de U en tôle d'acier pliée à plusieurs reprises et entourant une partie longitudinale inférieure du montant de rayonnage (1) sur au moins trois côtés (1A, 1B, 1C), le corps de base (2) étant composé d'une paroi avant (12) et de parois latérales gauche et droite (20, 21) adjacentes à la paroi avant (12) et qui s'étendent à partir de la paroi avant (12) respectivement vers l'arrière et y forment respectivement un bord arrière, les surfaces intérieures (16, 17, 18, 23, 24) de la paroi avant (12) et des parois latérales (20, 21) étant tournées vers montant (1), et comprenant des socles de fixation disposés sur le corps de base (2) et destinés au montage au sol du dispositif de protection, les socles de fixation reposant au sol par des faces inférieures (31, 32, 33) réalisées sur ceux-ci, et les socles de fixation présentant des ouvertures (35, 36) pour le passage d'éléments de fixation pouvant être ancrés dans le sol,
**caractérisé en ce que** les parois latérales (20, 21) sont reliées ensemble au niveau de leurs bords arrière (20A, 21A) par une plaque de renfort (45), les bords arrière (20A, 21A) s'étendant obliquement par rapport à la verticale **en ce que** la hauteur des parois latérales (20, 21) diminue vers l'arrière, au moins sur une partie de l'extension horizontale des parois latérales (20, 21).

2. Dispositif de protection selon la revendication 1, **caractérisé en ce que** les parois latérales (20, 21) présentent au niveau de leurs bords arrière (20A, 21A) des parties de bord (41, 42) coudées l'une vers l'autre, auxquelles est fixée la plaque de renfort (45).

3. Dispositif de protection selon l'une quelconque des revendications 1 ou 2, **caractérisé en ce que** les parois latérales (20, 21) présentent une première partie latérale d'une hauteur substantiellement identique et une deuxième partie latérale d'une hauteur diminuant vers l'arrière, la première partie latérale étant adjacente à la paroi avant.

4. Dispositif de protection selon l'une quelconque des revendications 1 à 3, **caractérisé en ce que** les socles de fixation sont disposés sur les bords inférieurs des parois latérales (20, 21) et de la paroi avant (12).

5. Dispositif de protection selon l'une quelconque des revendications 1 à 4, **caractérisé en ce que** deux des socles de fixation sont des baguettes (27, 28) coudées perpendiculairement vers l'intérieur sur les bords inférieurs des parois latérales (20, 21), les faces inférieures des baguettes (27, 28) reposant sur le sol.

6. Dispositif de protection selon la revendication 5, **caractérisé en ce que** les baguettes (27, 28) passent au niveau de leurs extrémités avant respectivement à une patte de renfort (49), coudée vers le haut, qui est soudée à la surface intérieure (23, 24) de la paroi latérale respective (20, 21).

7. Dispositif de protection selon l'une quelconque des revendications 4 à 6, **caractérisé en ce que** l'un des socles de fixation est une plaque de base (29) soudée à la paroi avant (12) et aux deux parois latérales (20, 21).

8. Dispositif de protection selon la revendication 7, **caractérisé en ce que** les baguettes (27, 28) et la plaque de base (29) présentent des ouvertures (35, 36) pour le passage d'éléments de fixation pouvant être ancrés dans le sol.

9. Dispositif de protection selon la revendication 5 ou 6, **caractérisé en ce que** les baguettes (27, 28) s'étendent vers l'arrière au-delà des bords arrière des parois latérales (20, 21) et y forment des pattes (50) reposant à plat sur le sol.

10. Dispositif de protection selon la revendication 9, **caractérisé en ce que** les pattes (50) présentent des ouvertures (35) pour recevoir des éléments de fixation (40) pouvant être ancrés dans le sol.

11. Dispositif de protection selon l'une quelconque des revendications précédentes, **caractérisé en ce que** la paroi avant (12) est réalisée de manière segmentée et est composée d'un segment central (13) et de segments (14, 15) adjacents au segment central (13) à gauche et à droite, les segments (14, 15) étant disposés obliquement par rapport au segment central (13) .

12. Dispositif de protection selon la revendication 2, **caractérisé en ce que** la plaque de renfort (45) et les parties de bord (41, 42) coudées l'une vers l'autre présentent des ouvertures (55) correspondant les unes aux autres, à travers lesquelles passent des vis ou des rivets.
